# EUROPEAN PATENT APPLICATION

(11) **EP 4 485 613 A1**
(43) Date of publication of application: **01.01.2025**
(21) Application number: 23758932.0
(22) Date of filing: 17.01.2023
(51) Int. Cl.: H01M 10/42, H01M 4/131, H01M 4/1315, H01M 4/485, H01M 4/505, H01M 4/525, H01M 10/0525

(54) **POSITIVE ELECTRODE LITHIUM REPLENISHMENT ADDITIVE, PREPARATION METHOD THEREFOR AND USE THEREOF**

(30) Priority: 25.02.2022 CN 202210184488
(71) Applicant: Shenzhen Innovazone Technology Co., Ltd., Shenzhen, Guangdong 518000 (CN)
(72) Inventor: ZHU, Chengben, Shenzhen, Guangdong 518000 (CN); WAN, Yuanxin, Shenzhen, Guangdong 518000 (CN); KONG, Lingyong, Shenzhen, Guangdong 518000 (CN); ZHONG, Zeqin, Shenzhen, Guangdong 518000 (CN); ZHONG, Wen, Shenzhen, Guangdong 518000 (CN)
(74) Representative: Ehrner & Delmar Patentbyrå AB
(86) International application number: PCT/CN2023/072605
(87) International publication number: WO 2023/160307

(57) **Abstract**

A cathode lithium-supplementing additive, a preparation method thereof, and an application thereof are disclosed. The cathode lithium-supplementing additive of the present application includes a lithium-supplementing material, the lithium-supplementing material includes fluorine atoms, and the fluorine atoms replace oxygen atoms in the lithium-supplementing material and are in oxygen vacancies. According to the present application, the cathode lithium-supplementing additive is doped with fluorine, has relatively good high-voltage stability and thermal stability and relatively high rate performance, reduces the content of residual alkali, has high storage stability and good processability, and can also reduce gas production, thereby improving the cycle performance, electrochemical performance, and safety performance of a corresponding battery. In addition, the preparation method of the cathode lithium-supplementing additive can ensure stable structure and electrochemical performance of the cathode lithium-supplementing additive, have high efficiency, and reduce the production cost.

## Description

### TECHNICAL FIELD

The application relates to the field of secondary batteries, and specifically relates to a cathode lithium-supplementing additive, a preparation method thereof, and an application thereof.

### BACKGROUND

The oil energy crisis in the 1960s and 1970s urged people to look for new alternative energy sources. With the enhancement of people's awareness of environmental protection and energy crisis, lithium-ion batteries are considered to be one of the most promising energy sources due to their high operating voltage and energy density, relatively small self-discharge level, no memory effect, no pollution from heavy metal elements, such as lead and cadmium, and long cycle life. Lithium-ion batteries are widely used in electric vehicles, power tools, mobile consumer electronics, energy storage, and other aspects.

At present, the most commonly used cathode materials for lithium-ion batteries mainly include: lithium iron phosphate, lithium nickel cobalt manganese (aluminum) oxide ternary materials (commonly known as ternary materials), lithium cobalt oxide, lithium manganate, and the like. The most commonly used anode is carbon-based graphite materials and silicon-based anode materials, and the like. Although lithium-ion batteries have many advantages, during the initial charge of a lithium-ion battery, a surface of the anode is usually accompanied by the formation of a solid electrolyte (SEI) film. This process consumes a large amount of Li ⁺, which means that a part of Li ⁺ released from the cathode material is irreversibly consumed, and a reversible specific capacity of a corresponding cell reduces. The anode material, especially silicon-based anode material, will further consume Li ⁺, resulting in loss of lithium in the cathode material and reducing the initial Coulombic efficiency and battery capacity of the battery. For example, in a lithium-ion battery system using a graphite anode, about 10% of the lithium source will be consumed for the initial charge. When the anode material with high specific capacity is used, such as an alloy (silicon, tin, etc.), an oxide (silicon oxide, tin oxide), and an amorphous carbon anode, the consumption of lithium source in the cathode will be further aggravated.

In order to improve the problem of low Coulombic efficiency caused by the irreversible loss of the anode, researchers have developed related lithium-rich compounds as lithium-supplementing additives to solve the problem of irreversible loss of lithium ions during the initial charge and discharge.

Although these lithium-rich compounds have good lithium-supplementing effects, there are also some defects, for example, the existing material preparation processes and raw material properties, often lead to incomplete reaction of the raw materials (that is, high residual alkali), making the material sensitive to water and prone to gelation during homogenization, thereby leading to processing failure or even deterioration due to reaction with water. Therefore, the processing process requires extremely strict water control, making it difficult to implement large-scale applications on existing battery production lines. Due to the high alkali, the electrochemical performance, such as the lithium-supplementing effect, of lithium-rich compounds needs to be improved. Meanwhile, due to high voltage conditions, lithium-rich metal salt lithium-supplementing materials and electrolytes easily react at the interface to generate dangerous gases, which results in certain safety risks. Moreover, the electrical conductivity of these materials is not good, resulting in poor electrical properties of the materials and incapability to perform a good lithium-supplementing effect.

### TECHNCIAL PROBLEMS

It is an object of the present application to overcome the above-mentioned deficiencies in the prior art, and provide a cathode lithium-supplementing additive and a preparation method thereof to solve the technical problems of existing cathode lithium-supplementing additives, such as poor storage and processability and potential safety risks caused by easy gas production.

It is another object of the present application to provide a cathode plate and a secondary battery containing the electrode plate, in order to solve the technical problem of unsatisfactory electrochemical performance, such as the initial Coulombic efficiency, of the existing secondary batteries.

### TECHNICAL SOLUTIONS

In order to achieve the purpose of the above application, a first aspect of the present application provides a cathode lithium-supplementing additive. The cathode lithium-supplementing additive of the present application comprises a lithium-supplementing material. The lithium-supplementing material further comprises fluorine atoms, and the fluorine atoms replace oxygen atoms in the lithium-supplementing material and are in oxygen vacancies.

Further, a molar number of the fluorine atoms replacing the oxygen atoms is 0.01 to 0.8 times a molar number of the oxygen atoms in the cathode lithium-supplementing additive.

Further, a molar number of the fluorine atom replacing the oxygen atom is 0.01 to 0.1 times a molar number of the oxygen atoms in the cathode lithium-supplementing additive.

Further, a surface layer or a surface of the cathode lithium-supplementing additive further comprises a hydrophobic fluoride.

Specifically, the hydrophobic fluoride comprises lithium fluoride.

Further, a mass content of the hydrophobic fluoride in the cathode lithium-supplementing additive is 0.1 wt.% to 2 wt.%.

Further, a particle size of the cathode lithium-supplementing additive is 1 µm to 20 µm.

Further, the lithium-supplementing material comprises a molecular formula of LₓM_{y}O_{z}, in which, L represents Li or/and mixed alkali metal elements of Li and less than or equal to 30% of at least one of K and Na; M comprises at least one of Fe, Co, Ni, Mn, V, Fe-Co, Cu, Mo, Al, Ti, and Mg; and 0<x≤6, 0<y≤3, and 0<z≤5.

Specifically, the LₓM_{y}O_{z} comprises at least one of Ei₅Fe_{0.98}Al_{0.02}O₄, Li₂NiO₂, Li₅FeO₄, Li₂MnO₂, Li₆MnO₄, and Li₂CuO₂.

Further, the cathode lithium-supplementing additive further comprises a hydrophobic encapsulation layer, and the hydrophobic encapsulation layer covers the lithium-supplementing material.

Further, the hydrophobic encapsulation layer comprises at least one of an ionic conductor encapsulation layer and an electronic conductor encapsulation layer.

Specifically, a material of the ionic conductor encapsulation layer comprises at least one of a perovskite type, a NASICON type, and a garnet type.

Specifically, a material of the electronic conductor encapsulation layer comprises at least one of a carbon material, a conductive oxide, and a conductive organic matter.

Further, a thickness of the hydrophobic encapsulation layer is 5 nm to 100 nm.

A second aspect of the present application provides a preparation method of the cathode lithium-supplementing additive of the present application. The preparation method of the cathode lithium-supplementing additive of the present application comprises following steps:
mixing a lithium-supplementing material precursor and a fluorine source to obtain a precursor mixture material; and
sintering the precursor mixture material in an inert atmosphere to obtain the cathode lithium-supplementing additive.

Further, the lithium-supplementing material precursor comprises a LₓM_{y}O_{z} precursor, in which, L represents Li or/and mixed alkali metal elements of Li and less than or equal to 30% of at least one of K and Na; M comprises at least one of Fe, Co, Ni, Mn, V, Fe-Co, Cu, Mo, Al, Ti, and Mg; and 0<x≤6, 0<y≤3, and 0<z≤5.

Further, the lithium-supplementing material precursor comprises a transition metal salt, and a molar ratio of a fluorine element in the fluorine source to an oxygen element in the transition metal salt is (0.01 to 1) : 1.

Further, the sintering is performed at a temperature of 500°C to 1000°C for a time of 4 hrs to 24 hrs.

Further, the fluorine source comprises at least one of ammonium fluoride, sodium fluoride, potassium fluoride, lithium fluoride, aluminum fluoride, potassium bifluoride, and sodium bifluoride.

Further, after the sintering, the method further comprises forming a hydrophobic encapsulation layer covering a material after being sintered on a surface thereof.

A third aspect of the present application provides an electrode plate. The electrode plate of the present application comprises a current collector and an electrode active layer bonded to a surface of the current collector. The electrode active layer comprises the cathode lithium-supplementing additive of the present application or the cathode lithium-supplementing additive prepared by the preparation method of the cathode lithium-supplementing additive of the present application.

A fourth aspect of the present application provides a secondary battery. The present application comprises a cathode plate and an anode plate, and the cathode plate and/or the anode plate are the electrode plates of the present application.

Compared with the existing technology, technical effects of the present application are summarized as follows:
The cathode lithium-supplementing additive of the present application is doped with fluorine, which replaces oxygen vacancies, and the residual alkali content is reduced, making the cathode lithium-supplementing additive of the present application have a relatively high rate performance, as well as relatively good high voltage stability and excellent thermal stability performance, which improves the lithium-supplementing effect of the lithium-supplementation material and thus has high electrochemical performance and safety performance. In addition, due to the doping of fluorine and the reduction of the residual alkali content, the cathode lithium-supplementing additive of the present application can also be significantly improved to resist the negative effects of adverse factors such as water and carbon dioxide in the environment, effectively improving the storage stability and processability of the cathode lithium-supplementing additive of the present application, thereby improving the cycle and electrochemical performance of the corresponding electrode, reducing the gas production, and improving the safety performance. Furthermore, when the cathode lithium-supplementing additive of the present application contains hydrophobic fluoride and/or a hydrophobic encapsulation layer, the hydrophobic encapsulation layer and fluorine doping play a synergistic effect to improve the storage stability and processability, and the corresponding electrochemical performance of the cathode lithium-supplementing additive of the present application.

The preparation method of the cathode lithium-supplementing additive of the present application can effectively dope fluorine atoms in the lithium-supplementing material and replace the oxygen atoms contained in the lithium-supplementing material, thereby making the prepared cathode lithium-supplementing additive have relatively good storage stability, processability, and thermal stability, high rate performance and high voltage performance, and improving the lithium-supplementing effect, electrochemical performance, and safety performance of the lithium-supplementing material. In addition, the preparation method of the cathode lithium-supplementing additive can ensure that the prepared cathode lithium-supplementing additive has stable structure and electrochemical performance, high efficiency, and saves production costs.

Since the electrode plate of the present application contains the cathode lithium-supplementing additive of the present application, the cathode lithium-supplementing additive contained in the electrode plate of the present application can be used as a "sacrificial agent" during the first cycle of charging to supplement the irreversible lithium ions consumed by the anode during the formation of the SEI film, thereby maintaining sufficient lithium ions in the battery system and improving the overall electrochemical performance of the battery, such as initial Coulombic efficiency, high voltage resistance, and thermal stability.

Since the secondary battery of the present application contains the electrode plate of the present application, the lithium-ion battery of the present application has excellent initial Coulombic efficiency, battery capacity, cycle performance, safety performance, long service life, and stable electrochemical performance.

### DETAILED DESCRIPTION OF THE EMBODIMENTS

In order to make the technical problems, technical solutions, and beneficial effects to be solved in the present application clearer, the present application will be further described in detail below in conjunction with the embodiments. It should be understood that the specific embodiments described here are only used to explain the present application, but are not intended to limit the present application.

In the present application, the term "and/or" describes the association relationship of associated objects, indicating that there may be three relationships, for example, A and/or B, which may mean the following conditions: A exists alone, A and B exist simultaneously, and B exists alone. Among them, A and B can be singular or plural. The character "/" generally indicates that the contextual objects have an "or" relationship.

In the present application, "at least one" means one or more, and "multiple" means two or more. "At least one of the following" or similar expressions refers to any combination of these items, including any combination of single or plural items. For example, "at least one of a, b, or c", or "at least one of a, b, and c" can mean: a, b, c, a-b (that is, a and b), a-c, b-c, or a-b-c, in which, a, b, and c can be singular or plural.

It should be understood that in various embodiments of the present application, the sequence numbers of the above processes do not mean the order of execution, and some or all steps may be executed in parallel or sequentially, and the execution order of each process shall be determined based on its functions and internal logic and should not constitute any limitation to the implementation process of the embodiments of the present application.

Terms used in the embodiments of the present application are only for the purpose of describing specific embodiments, and are not intended to limit the present application. The singular forms "a", "said" and "the" used in the embodiments of the present application and the appended claims are also intended to include plural forms unless otherwise clearly indicated in the context.

The masses of the relevant components mentioned of the embodiments of the present application in the specification can not only refer to the specific contents of the component, but also represent the proportional relationship between the masses of the different components. The scaling up or down of the content of the fraction is within the scope disclosed the embodiments of the present application in the specification. Specifically, the mass described the embodiments of the present application in the specification may be µg, mg, g, kg and other well-known mass units in the chemical industry.

In the first aspect, embodiments of the present application provide a cathode lithium-supplementing additive. The cathode lithium-supplementing additive in the embodiments of the present application comprises a lithium-supplementing material and fluorine atoms for doping the lithium-supplementing material, and the fluorine atoms replace the oxygen atoms in the lithium-supplementing material and are in oxygen vacancies. In this way, the lithium-supplementing material contained in the cathode lithium-supplementing additive of the embodiments of the present application is rich in lithium, thereby ensuring that the cathode lithium-supplementing additive of the embodiments of the present application can provide abundant lithium, and after being added to the electrode as a cathode lithium-supplementing additive, can be used as a "sacrifice agent" during the first cycle of charge, so as to release all the lithium ions contained in the cathode lithium-supplementing additive as much as possible at one time to supplement the irreversible lithium ions consumed by the anode during the formation of the SEI film. The cathode lithium-supplementing additive of the embodiments of the present application contains doping fluorine atoms, which replace the oxygen atoms and are in oxygen vacancies, thereby making the cathode lithium-supplementing additive of the embodiments of the present application have relatively high rate performance, as well as relatively good high voltage stability and excellent thermal stability performance, which improves the lithium-supplementing effect of the lithium-supplementation material and thus has high electrochemical performance and safety performance. In addition, due to the low residual alkali content, the cathode lithium-supplementing additive of the present application is significantly improved to resist the negative effects of adverse factors such as water and carbon dioxide in the environment, making the cathode lithium-supplementing additive have relatively high storage stability and processability as well as reducing the gas production, thereby improving the cycle and electrochemical performance and the safety performance of the corresponding battery.

In an embodiment, a content of the fluorine atoms replacing the oxygen atoms in the cathode lithium-supplementing additive in the embodiments of the present application satisfies that the fluorine atom replacing the oxygen atom is 0.01 to 0.8 times the molar number of oxygen atoms in the cathode lithium-supplementing additive, and is further 0.01 to 0.1 times, that is, a molar ratio of the fluorine atom replacing the oxygen atom to the oxygen atom is 0.01 to 0.8:1, and is further (0.01 to 0.1) : 1. By controlling the amount of fluorine doping, the above performances of the cathode lithium-supplementing additive in the embodiments of the present application can be improved, such as reducing the residual alkali content of the cathode lithium-supplementing additive, improving the storage stability, processability, and rate performance of the cathode lithium-supplementing additive, and making the cathode lithium-supplementing additive have high voltage stability and thermal stability, thereby improving the lithium-supplementing effect of lithium-supplementing materials and ensuring high electrochemical performance and safety performance thereof.

In a further embodiment, a surface layer or a surface of the cathode lithium-supplementing additive in the embodiments of the present application further comprises a hydrophobic fluoride. Specifically, the hydrophobic fluoride may be bonded to the surface of the cathode lithium-supplementing additive of the embodiments of the present application, such as forming a coating layer, or doped and distributed in the surface layer of the cathode lithium-supplementing additive of the embodiments of the present application. In this way, the hydrophobic fluoride and the doping fluorine atoms can play a synergistic effect, effectively improve the lithium ion conductivity of the cathode lithium-supplementing additive, and improve the lithium-supplementing effect of the cathode lithium-supplementing additive. Moreover, the hydrophobic fluoride together with the fluorine atoms can also play a role in isolating the environment, such as insulating unfavorable factors such as water vapor in the environment from the lithium-supplementing material, thus protecting the lithium-supplementing material, thereby improving the lithium-supplementing stability, storage performance and processability of the positive lithium-supplementing additive of the embodiments of the present application.

Based on the above embodiments of hydrophobic fluoride, the content of the hydrophobic fluoride in the cathode lithium-supplementing additive is 0.1 wt.% to 2 wt.%. In an exemplary embodiment, the content of the hydrophobic fluoride in the cathode lithium-supplementing additive can be 0.1 wt.% , 0.2 wt.%. , 0.5 wt.%, 0.8 wt.%, 1 wt.%, 1.2 wt.%, 1.5 wt.%, 1.8 wt.%, 2 wt.%, or other typical but non-limiting contents. By controlling the content of hydrophobic fluoride, the above functions of hydrophobic fluoride can be improved, thereby improving the lithium-supplementing effect, lithium-supplementing stability, storage performance, and processability of the cathode lithium-supplementing additive in the embodiments of the present application.

In an embodiment, the lithium-supplementing material in the above embodiments may comprise LₓM_{y}O_{z}, in which, L in the molecular formula of LₓM_{y}O_{z} represents Li or/and mixed alkali metal elements of Li and less than or equal to 30% of at least one of K and Na; M comprises at least one of Fe, Co, Ni, Mn, V, Fe-Co, Cu, Mo, Al, Ti, and Mg; and 0<x≤6, 0<y≤3, and 0<z≤5.Therefore, according to the element type mentioned in M, the lithium-supplementing material may be at least one of an iron-based lithium-supplementing material, a manganese-based lithium-supplementing material, a nickel-based lithium-supplementing material, and the like. In a specific embodiment, M in LₓM_{y}O_{z} represents Fe and Al. In such condition, the lithium-rich lithium-supplementing material shown by LₓM_{y}O_{z} can be Li₅Fe_{0.98}Al_{0.02}O₄, and can also be but not limited to Li₂NiO₂, Li₅FeO₄, Li₂MnO₂, Li₆MnO₄, Li₂CuO₂, and the like. These lithium-supplementing materials are rich in lithium and can release lithium ions during the first cycle of charging to effectively supplement lithium ions. When the lithium-supplementing material has an inverse fluorite structure, the unidirectional capacity characteristics of the lithium-supplementing material can also be improved, thereby ensuring the lithium-supplementing effect of the cathode lithium-supplementing additive of the present application. When the lithium-supplementing material is doped with the aluminum element, Al atoms exist in the form of replacing iron atoms in the lattice. Al atoms in this form can widen the transmission channel of lithium ions and increase the deintercalation rate of the lithium ions.

In addition, the type of the cathode lithium-supplementing additive in the embodiments of the present application, such as the cathode lithium-supplementing additive, is determined according to the type of the lithium-supplementing material, such as the cathode lithium-supplementing material or the anode lithium-supplementing material.

Secondly, the morphology and particle size of the cathode lithium-supplementing additives in the above embodiments can be adjusted according to actual production conditions or application needs. For example, the morphology can be limited to particle morphology, and the particle size can be limited to 1 µm to 20 µm, and is further 2 µm to 20 µm. By controlling and adjusting the morphology and particle size of the cathode lithium-supplementing additive, the overall particle size of the cathode lithium-supplementing additive in the embodiments of the present application can be controlled and adjusted, thereby making the lithium-supplementing material full play the lithium-supplementing effect.

On the basis of the above-mentioned embodiments, as an embodiment of the present application, the cathode lithium-supplementing additive in the embodiments of the present application further comprises a hydrophobic encapsulation layer. The hydrophobic encapsulation layer covers a core formed by the above lithium-supplementing material. For example, when the hydrophobic lithium fluoride bonded to the surface of the lithium-supplementing material forms a coating layer, the hydrophobic encapsulation layer covers an outer surface of the lithium fluoride coating layer. By adding the hydrophobic encapsulation layer to the cathode lithium-supplementing additive of the embodiments of the present application, the hydrophobic encapsulation layer can effectively cover the above lithium-supplementing material, and the above lithium-supplementing material can be coated by the hydrophobic encapsulation layer, thereby improving the isolation effect of the above lithium-supplementing material from the ambient environment, preventing the ambient environment, such as moisture and carbon dioxide, from contacting the above lithium-supplementing material, ensuring the stability of the above-mentioned lithium-supplementing material, and thus ensuring the lithium-supplementing effect and stability of the cathode lithium-supplementing additive of the present application.

When the cathode lithium-supplementing additive in the embodiments of the present application contains the above hydrophobic encapsulation layer, the hydrophobic encapsulation layer can be a layer structure that can effectively isolate unfavorable factors, such as water vapor or carbon dioxide in the environment, and its material can be capable of forming a dense hydrophobic coating layer and effectively ensuring the stability of the granular lithium-supplementing material. On this basis, the material of the hydrophobic encapsulation layer can also be an ionic conductor encapsulation layer that can facilitate ion conductivity, or can be an electronic conductor encapsulation layer that can improve electrical conductivity, or can be a composite layer structure formed by an ionic conductor encapsulation layer and an electronic conductor encapsulation layer. When the hydrophobic encapsulation layer is a composite layer structure formed by the ionic conductor encapsulation layer and the electronic conductor encapsulation layer, either the ionic conductor encapsulation layer or the electronic conductor encapsulation layer can be directly coated on the surface of the above granular lithium-supplementing material which has lithium fluoride bonded to the surface thereof. Among them, the ionic conductor encapsulation layer can improve the deintercalation effect of lithium ions and the ion conductivity of lithium ions. The electronic conductor encapsulation layer can improve the electronic conductivity of the lithium-supplementing material, improve the conductivity thereof, stimulate the gram capacity of the cathode lithium-supplementing additive, and realize the real high-efficiency lithium-supplementing.

When the hydrophobic encapsulation layer comprises an ionic conductor encapsulation layer, the ionic conductor encapsulation layer plays a role in improving lithium ion conductivity. Therefore, the material of the ionic conductor encapsulation layer may be a material that is beneficial to improving ion conductivity, such as, but not limited to, at least one of a perovskite type, a NASICON type, and a garnet type. In a specific embodiment, the perovskite type comprises Li₃ₓLa_{2/3-x}TiO₃ (LLTO), which is specifically at least one of Li_{0.5}La_{0.5}TiO₃, Li_{0.33}La_{0.57}TiO₃, Li_{0.29}La_{0.57}TiO₃, Li_{0.33}Ba_{0.25}La_{0.39}TiO₃, (Li_{0.33}La_{0.56})_{1.005}Ti_{0. 99}Al_{0.01}O₃, and Li_{0.5}La_{0.5}Ti_{0.95}Zr_{0.05}O₃. The NASICON type is such as but not limited to Li_{1.4}Al_{0.4}Ti_{1.6}(PO₄)₃(LATP). The garnet type includes at least one of Li₇La₃Zr₂O₁₂ (LLZO), Li_{6·4}La₃Zr_{1·4}Ta_{0·6}O₁₂, and Li_{6.5}La₃Zr_{1.5}Ta_{0.5}O₁₂. By selecting the material of the ionic conductor encapsulation layer, the ion conductivity of the ionic conductor encapsulation layer can be further improved.

When the hydrophobic encapsulation layer comprises an electronic conductor encapsulation layer, the electronic conductor encapsulation layer can enhance the electronic conductivity of the hydrophobic encapsulation layer, thereby enhancing the electronic conductivity of the cathode lithium-supplementing additive, which is beneficial to reducing the internal impedance of the electrode. meanwhile, during and after the release of the above-mentioned granular lithium-supplementing materials as the "sacrifice", the electronic conductor encapsulation layer can also be reused and play an auxiliary role as a conductive agent inside the electrode. Moreover, the electronic conductor encapsulation layer may further synergize the density with the ionic conductor encapsulation layer, improving the density of the hydrophobic encapsulation layer, thereby improving the lithium-supplementing stability and lithium-supplementing effect of the cathode lithium-supplementing additive. Based on the function of the electronic conductor encapsulation layer, the electronic conductor encapsulation layer can be fully covered or partially covered. In an embodiment, the material of the electronic conductor encapsulation layer comprises at least one of a carbon material, a conductive oxide, and a conductive organic matter. In a specific embodiment, when the material of the electronic conductor encapsulation layer is a carbon material, the carbon material comprises at least one of an amorphous carbon, a carbon nanotubes, a graphite, a carbon black, a graphene, and the like. In another specific embodiment, when the material of the electronic conductor encapsulation layer is a conductive oxide, the conductive oxide may comprise at least one of In₂O₃, ZnO, and SnO₂. The conductive organic matter may be a conductive polymer or the like. By adjusting the content and material of the electronic conductor encapsulation layer, the electronic conductivity thereof can be further improved.

In a further embodiment, a thickness of the hydrophobic encapsulation layer may be 5 nm to 100 nm. For example, this thickness can be adjusted by controlling thicknesses of the ionic conductor encapsulation layer and the electronic conductor encapsulation layer contained in the above hydrophobic encapsulation layer. By controlling the thickness of the hydrophobic encapsulation layer within this range, the density of the hydrophobic encapsulation layer can be improved, which further improves the storage stability and processability of the cathode lithium-supplementing additive, and meanwhile improves the ionic and/or electronic conductivity of the cathode lithium-supplementing additive.

In addition, the hydrophobic encapsulation layer can further comprise other functional layers as required, and the types of other functional layers can be flexibly selected as required.

In embodiments, when the cathode lithium-supplementing additive in the embodiments of the present application contains a hydrophobic encapsulation layer, the lithium-supplementing material forming the core may be at least one of a primary particle and a secondary particle of the lithium-supplementing material.

In the second aspect, embodiments of the present application also provide a preparation method of the above cathode lithium-supplementing additive. The preparation method of the cathode lithium-supplementing additive in the embodiments of the present application comprises the following steps:
S01: mixing a lithium-supplementing material precursor and a fluorine source to obtain a precursor mixture material; and
S02: sintering the precursor mixture material in an inert atmosphere to obtain the cathode lithium-supplementing additive.

The lithium-supplementing material precursor in step S01 is a precursor for forming the lithium-supplementing material contained in the cathode lithium-supplementing additive of the above embodiments of the present application, as in an embodiment, the lithium-supplementing material precursor may comprise a LₓM_{y}O_{z} precursor. After the sintering process in the step S02, the lithium-supplementing material precursor generates the above LₓM_{y}O_{z}.

The fluorine source in step S01 is to provide fluorine atoms. Therefore, in an embodiment, the fluorine source comprises at least one of ammonium fluoride, sodium fluoride, potassium fluoride, lithium fluoride, aluminum fluoride, potassium bifluoride, and sodium bifluoride. These fluorine sources can replace oxygen atoms contained in the lithium-supplementing material generated during the sintering process in step S02 with fluorine atoms.

In embodiments, the mixing ratio of the fluorine source to the lithium-supplementing material precursor should satisfy that in the generated cathode lithium-supplementing additive, a molar number of the fluorine atoms replacing oxygen atoms is 0.01 to 0.1 times the molar number of oxygen atoms in the cathode lithium-supplementing additive. As in an embodiment, when the lithium-supplementing material precursor comprises a mixture of a transition metal salt, a lithium source, and other raw materials, then the lithium-supplementing material precursor contains oxygen element. For example, when the lithium-supplementing material precursor is a LₓM_{y}O_{z} precursor, in such case, the molar ratio of the fluorine element in the fluorine source to the oxygen element in the transition metal salt is (0.01 to 1) : 1, further (0.01 to 0.1):1, and further (0.02 to 0.2):1. Through the mixing ratio of the fluorine source, the amount of fluorine atoms replacing oxygen atoms can be moderately controlled, thereby improving the rate performance, voltage stability, thermal stability and other properties of the cathode lithium-supplementing additive, and meanwhile, the particle size of the cathode lithium-supplementing additive can also be adjusted and controlled, making the particle size relatively small.

In a specific embodiment, when the mixture formed by a transition metal salt, a lithium sources, and other raw materials is adopted as the lithium-supplementing material precursor. The transition metal salt can be a transition metal represented by M in LₓM_{y}O_{z}, such as, but not limited to, one or more of ammonium iron oxalate, iron nitrate (manganese, copper), iron sulfate (manganese, copper), iron chloride (manganese, copper), ferric oxide (manganese dioxide, manganese oxide, copper oxide, cuprous oxide), iron acetate, and the lithium source can comprise, but not only limited to, at least one of LiOH, Li₂CO₃, CH₃COOLi, CH₃CH₂OLi, LiNO₃, LiCl, and Li₂SO₄.

In addition, the mixing process in step S01 may be a solid-phase mixing process or a liquid-phase mixing process. The solid-phase mixing process may comprise at least one of solid-phase ball mill mixing, soybean milk machine mixing, three-dimensional mixer mixing, high-efficiency mixer mixing, fusion machine mixing, and the like. The liquid-phase mixing process may comprise stirring mixing, liquid-phase mixing followed by spray drying, sol-gel method, and the like. When the spray drying is used, a dispersant can also be added. The dispersant is one or more of polyvinylpyrrolidone (PVP), polyethylene glycol (PEG), and polyvinyl alcohol. The addition of the dispersant can account for 1 wt.% to 5 wt.% of a total mass of the transition metal salt and the ion source, and an air inlet temperature of the spray drying is 110°C to 180°C.

In step S02, during the sintering process of the precursor mixture material, the lithium-supplementing material precursor in the precursor mixture reacts to generate a lithium-supplementing material, such as the above lithium-supplementing material. In this process, the fluorine source also participates in the reaction. Since the diameter difference between fluorine atoms and oxygen atoms is small, and because the diameter difference between fluorine atoms and oxygen atoms is small, under the action of high temperature, partial substitution occurs easily, that is, fluorine atoms substitute oxygen atoms, so that fluorine atoms replace a part of the oxygen atoms in the lithium-supplementing material and occupy the oxygen vacancies of the oxygen atoms.

In an embodiment, the sintering is performed at a temperature of 500°C to 1000°C for a time of 4 hrs to 24 hrs. The sintering process conditions, such as an inert atmosphere and the above temperature range, can effectively make the lithium-supplementing material precursor react to form the lithium-supplementing material. Meanwhile, the generated cathode lithium-supplementing additive is a material with good stability and low reactivity. Therefore, it is difficult, that is, rare, for the fluorine source to react directly with the cathode lithium-supplementing additive to form fluoride. Instead, the fluorine atoms replace the oxygen atoms in the lithium-supplementing material without destroying the structure of the lithium-supplementing material itself. The residual alkali or lithium metal on the surface of the cathode lithium additive is a highly reactive substance, which, therefore, can react more easily with the fluorine source to form fluoride. In this way, the voltage stability and the thermal stability of the lithium-supplementing material can be improved, and the electrochemical performance and the safety performance of the cathode lithium-supplementing additive generated by the sintering process can be improved.

In addition, during the sintering process, impurities such as precursor raw materials or other residual alkali generally remain on the surface of the lithium-supplementing material generated by the sintering process. Therefore, the fluorine source will also react with the impurities such as precursor raw materials or other residual alkali remaining on the surface layer or the surface of the lithium-supplementing material generated during the sintering process, whereby generating hydrophobic fluoride, such as lithium fluoride, etc., thereby improving the ion conductivity of the cathode lithium additive and isolating the environment.

In step S02, the inert atmosphere ensures the stability of the target product generated by the sintering process. For example, in an embodiment, the inert atmosphere can be an atmosphere composed of a chemical inert gas. In an embodiment, the chemical inert gas can be a conventional chemical inert gas, such as at least one of Ar, N₂, He, and the like.

In a further embodiment, after the above-mentioned sintering process, a step of forming a hydrophobic encapsulation layer on the surface of the lithium supplementing material is further included. The method of forming the hydrophobic encapsulation layer can include selecting a corresponding or suitable method according to the structure and the material of the film layer. As in an embodiment, when the hydrophobic encapsulation layer is a carbon coating layer, the carbon coating layer may be thermally decomposed using a solid carbon source. If a solid carbon source is used for coating, firstly, the crushed material of the cracked cathode lithium additive is mixed with the solid carbon source. The mixing method includes at least one of solid-phase ball mill mixing, soybean milk machine mixing, three-dimensional mixer mixing, high-efficiency mixer mixing, fusion machine mixing, and the like. After mixing, sintering is performed under an inert condition. The carbon source may be at least one of glucose, sucrose, starch, citric acid, cellulose, polytetrafluoroethylene (PTFE), polyvinylidene fluoride (PVDF), asphalt, and the like. The inert atmosphere can be at least one of Ar, N₂, and He. The sintering temperature can be 400°C to 800°C, and the time is 1 hr to 10 hrs. Such sintering process can make the carbon coating layer uniform and dense. If the temperature is too low, the carbon source will be difficult to crack and the carbon coating effect will not be achieved. If the temperature is too high, the carbon source may crack too fast, making the carbon coating uneven. The mass ratio of the final carbon to the lithium-supplementing material can be controlled as (2 to 20): 100. If the final carbon content in the mass ratio is too low, the carbon will not be able to completely cover the lithium-supplementing material, resulting in defects in the surface conductivity of the material. If the carbon content is too high, the capacity of carbon itself is low, which will reduce the overall capacity of the material.

Therefore, the above preparation method of the cathode lithium-supplementing additive uses a fluorine source to in-situ dope the lithium-supplementing material, which can effectively dope fluorine atoms into the lithium-supplementing material to replace the oxygen atoms contained in the lithium-supplementing material, thereby making the prepared cathode lithium-supplementing additive have high rate performance, voltage stability, and thermal stability, which improves the lithium-supplementing effect, the electrochemical performance, and the safety performance of the lithium-supplementing material. In addition, the preparation method of the cathode lithium-supplementing additive can ensure that the prepared cathode lithium-supplementing additive has stable structure and electrochemical performance, high efficiency, and saves production costs.

In a third aspect, embodiments of the present application further provide an electrode plate. The electrode plate of the embodiments of the present application comprises an electrode current collector and an electrode active layer bonded to a surface of the electrode current collector. The electrode active layer contains the cathode lithium-supplementing additive according to the above embodiments of the present application. Since the electrode plate of the embodiments of the present application contains the cathode lithium-supplementing additive of the above embodiments of the present application, during the process of charging and discharging, the cathode lithium-supplementing additive contained in the cathode plate plays the above role and can be used as a lithium source in the first cycle of charging and firstly consumed as a "sacrifice agent" to supplement the irreversible lithium ions consumed by the formation of the SEI film on the anode, so as to maintain the abundance of lithium ions in the battery system and improve the initial Coulombic efficiency and overall electrochemical performance of the battery. Moreover, the quality of the cathode plate is stable and the yield rate is high.

In one embodiment, a mass content of the cathode lithium-supplementing additive contained in the electrode active layer of the above embodiments of the present application can be 1 wt.% to 20 wt.%; preferably, 2 wt.% to 10 wt.%. In addition to the cathode lithium-supplementing additive, the electrode active layer further includes: an electrode active material, a binder, and a conductive agent. The binder can be commonly used electrode binder, including, for example, one or more of a polyvinylidene chloride, a soluble polytetrafluoroethylene vinyl fluoride, a styrene-butadiene rubber, a hydroxypropyl methylcellulose, a carboxymethylcellulose, a polyvinyl alcohol, an acrylonitrile copolymer, a sodium alginate, a chitosan, and a chitosan derivative. In an embodiment of the present application, the conductive agent may be a commonly used conductive agent, including, for example, one or more of a graphite, a carbon black, an acetylene black, a graphene, a carbon fiber, C60, and a carbon nanotube. The electrode active material may be a cathode active material or an anode active material. In a specific embodiment, the cathode active material may include one or more of lithium cobaltate, lithium manganate, lithium iron phosphate, lithium vanadium phosphate, lithium vanadium oxyphosphate, lithium fluorovanadium phosphate, lithium titanate, lithium nickel cobalt manganate, and lithium nickel cobalt aluminate.

In an embodiment, the preparation process of the electrode plate can be as follows: the electrode active material, the cathode lithium-supplementing additive, the conductive agent, and the binder are mixed to obtain an electrode slurry, and the cathode slurry is coated on the cathode current collector, followed with drying, rolling, die-cutting and other steps to prepare the electrode plate.

In a fourth aspect, embodiments of the present application further provide a secondary battery. The secondary battery of the embodiments of the present application includes necessary components, such as a cathode plate, an anode plate, a separator, and an electrolyte, as well as other necessary or auxiliary components. The cathode plate or/and the anode plate are the electrode plates of the above embodiments of the present application. Specifically, when the electrode plate is a cathode plate and contains the cathode lithium-supplementing additive of the above embodiments of the present application, and the cathode lithium-supplementing additive is a lithium-supplementing additive, then the cathode plate contained in the secondary battery is the electrode plate (cathode plate) of the above embodiments of the present application.

Since the secondary battery of the embodiments of the present application contains the cathode lithium-supplementing additive of the above embodiments of the present application, based on that the cathode lithium-supplementing additive the above embodiments of the present application has excellent lithium-supplementing performance or further has ion conductivity and/or electron conductivity, processability, the secondary battery of the embodiments of the present application has excellent initial Coulombic efficiency, battery capacity, and cycle performance, long service life, and stable electrochemical performance.

A number of specific examples are used below to illustrate the cathode lithium-supplementing additives of the present application and their preparation methods and applications.

### 1. Examples of cathode lithium-supplementing additives and methods for controlling particle sizes thereof:

### Example 1

This example provides a fluorine-doped cathode lithium-supplementing additive and a preparation method thereof. The cathode lithium-supplementing additive includes a Li₂NiO₂ lithium-supplementing material and a carbon coating layer covering the lithium-supplementing material. The lithium-supplementing material is doped with fluorine atoms.

The control method of the cathode lithium-supplementing additive in this example was performed by the following steps:
S1. a Li₂NiO₂ lithium-supplementing material precursor and ammonium fluoride were subjected to a solid-phase mixing with a molar ratio of 1:0.2 (in which, a molar ratio of oxygen to fluorine was 1:0.1) to obtain a precursor mixture material;
S2. the precursor mixture material was sintered at 580°C for 12 hrs in an argon-protected environment to obtain a fluorine-doped lithium-supplementing material;
S3. a carbon coating layer was formed *in situ* on a surface of the fluorine-doped lithium-supplementing material: the fluorine-doped lithium-supplementing material and a medium-temperature pitch powder accounting for 5 wt.% of the fluorine-doped lithium-supplementing material were performed with the solid-phase mixing, then sintered at 600°C for 6 hrs in an argon atmosphere to obtain a carbon-coated fluorine-doped lithium-supplementing material.

After testing, the lithium-supplementing material in this example was doped with fluorine atoms. The fluorine atom replaced the oxygen atoms in the lithium-supplementing material. The compound formed was Li₂NiO_{1.96}F_{0.08}. The cathode lithium-supplementing additive was measured by a laser particle size analyzer. The particle size D50 was 5.32 µm.

### Example 2

This example provides a fluorine-doped cathode lithium-supplementing additive and a preparation method thereof. The cathode lithium-supplementing additive includes a Li₂NiO₂ lithium-supplementing material and a carbon coating layer covering the lithium-supplementing material. The lithium-supplementing material is doped with fluorine atoms.

The control method of the cathode lithium-supplementing additive in this example was performed by the following steps:
S1. a Li₂NiO₂ lithium-supplementing material precursor and sodium bifluoride were subjected to a solid-phase mixing with a molar ratio of 1:0.3 (in which, a molar ratio of oxygen to fluorine was 1:0.15) to obtain a precursor mixture material;
S2. the precursor mixture material was sintered at 650°C for 8 hrs in an argon-protected environment to obtain a fluorine-doped lithium-supplementing material;
S3. a carbon coating layer was formed *in situ* on a surface of the fluorine-doped lithium-supplementing material: the fluorine-doped lithium-supplementing material and a glucose powder accounting for 7 wt.% of the fluorine-doped lithium-supplementing material were performed with the solid-phase mixing, then sintered at 650°C for 4 hrs in an argon atmosphere to obtain a carbon-coated fluorine-doped lithium-supplementing material.

After testing, the lithium-supplementing material in this example was doped with fluorine atoms. The fluorine atom replaced the oxygen atoms in the lithium-supplementing material. The compound formed was Li₅FeO_{3.93}F_{0.14}. The cathode lithium-supplementing additive was measured by a laser particle size analyzer. The particle size D50 was 3.64 µm.

### Comparative example 1

This comparative example provides a cathode lithium-supplementing additive and a preparation method thereof. The cathode lithium-supplementing additive in this comparative example is the core of the lithium-supplementing material prepared in step S1 in Example 1 and the carbon coating layer prepared in Step S3 in Example 1. That is to say, compared with Example 1, the cathode lithium-supplementing additive of this comparative example does not contain doping fluorine atoms.

### Comparative example 2

This comparative example provides a cathode lithium-supplementing additive and a preparation method thereof. The cathode lithium-supplementing additive in this comparative example is the core of the lithium-supplementing material prepared in step S1 in Example 2 and the carbon coating layer prepared in step S3 in Example 2. That is to say, compared with Example 2, the cathode lithium-supplementing additive of this comparative example does not contain doping fluorine atoms.

### 2. Examples of Lithium-ion battery:

The cathode lithium-supplementing additives provided by the above Examples 1-2 and the cathode lithium-supplementing additives provided by the comparative examples were assembled into cathodes and lithium-ion batteries according to the following methods:
Cathode: under the same conditions, (main material + lithium-supplementing material), Super P-Li, and PVDF were mixed according to a ratio of (main material + lithium-supplementing material): Super P-Li: PVDF being 95:2:3, in which, the main material was a nano-lithium iron phosphate material, and the lithium-supplementing material accounted for 3 wt.% of the main material, and the material was mixed evenly with N-methylpyrrolidone (NMP) as a solvent to obtain a slurry, which was then evenly coated on a surface of an aluminum foil, a resulting aluminum foil was rolled to a certain thickness, and vacuumed dried at 110°C for 12 hrs to yield a cathode plate, in which, the cathode lithium-supplementing additives were the cathode lithium-supplementing additives provided in the Examples 1-2 and the cathode lithium-supplementing additives provided in the comparative examples;
Counter electrode: lithium metal plate;
Electrolyte: the electrolyte was a 1 mol/L LiPF₆ solution, in which, a volume ratio of ethylene carbonate to diethyl carbonate was 1:1.
Separator: polypropylene microporous membrane;
Battery casing: (including an anode casing, a stainless steel gasket, and a cathode casing) the model was CR2032;

Lithium-ion battery assembly: a button lithium-ion battery was assembled according to an assembly sequence of anode casing-stainless steel gasket-lithium metal plate-separator-electrolyte-cathode plate-cathode casing in an inert atmosphere glove box.

### 3. Related performance tests of lithium-ion batteries

The relevant electrochemical performances of each lithium-ion battery assembled in the above-mentioned lithium-ion battery examples were tested, and the test conditions were as follows:
Test conditions: the assembled battery was placed on a shelf at a constant temperature room of 25°C, stood for 6 hrs, then performed with a charge and discharge test. Specifically, the battery was firstly charged at a constant current of 0.05 C to 4.3V, then charged at a constant voltage until a cut-off current was 0.01 C, then discharged to 2 V at 0.05 C. At the beginning of the second cycle, the charge or discharge voltage window was adjusted to 2 V to 3.75V, and charged or discharged at a rate of 0.05 C, and a constant voltage charging cut-off current was 0.01C, the charge and discharge were performed for 100 cycles with the above charge and discharge conditions. The initial charge and discharge capacity of the battery and the 100th cycle charge and discharge capacity were recorded.

The initial Coulombic efficiency is a ratio of the initial discharge capacity to the initial charge capacity, and the 100-cycle capacity retention rate is the ratio of the discharge capacity to the initial discharge capacity in the 100th cycle.

The relevant electrochemical properties of lithium-ion batteries are shown in Table 1 below:

**Table 1**

| Test number | Actual composition | Particle size D50 µm | Initial charge capacity mAh/g | Initial discharge capacity mAh/g | Initial Coulombic efficiency | 100-cycle capacity retention rate |
|---|---|---|---|---|---|---|
| Example 1 | Li₂NiO_{1.92}F_{0.08}@C | 3.32 | 167.0 | 162.4 | 97.25% | 99.52% |
| Example 2 | Li₅FeO_{3.93}F_{0.14}@C | 7.64 | 172.8 | 167.5 | 96.93% | 98.78% |
| Comparative Example 1 | Li₂NiO₂@C | 3.07 | 163.6 | 155.2 | 94.87% | 90.62% |
| Comparative Example 2 | Li₅FeO₄@C | 7.35 | 168.5 | 160.1 | 95.01 % | 87.53% |

From the data results of the examples and comparative examples in the table, it can be seen that when the lithium-supplementing material was subjected with fluorine doping and carbon coating, which was specifically like the cathode lithium-supplementing additives in Example 1 and Example 2, due to surface reaction and carbon deposition, on the premise that both containing a carbon coating layer, the particle size of the cathode lithium-supplementing additive containing fluorine-doped core is slightly larger than that of the cathode lithium-supplementing additive with the core not doped by fluorine, specifically, for example, the particle size D50 of the material in Example 1 was larger than that of Comparative Example 1, and the particle size D50 of the material in Example 2 was larger than that of Comparative Example 2. It can be seen from the comparison results of the button battery test data of the examples and the comparative examples: the initial charge capacity and the discharge capacity of the example 1 and the example 2 were obviously improved compared with the comparative example 1 and the comparative example 2, and the initial Coulombic efficiency was of the example 1 and the example 2 were also significantly improved compared with the comparative example 1 and the comparative example. This was because the structure of the lithium-supplementing material was more stable after fluorine doping and carbon coating, and the influence of moisture in the processing environment becomes weaker, that is, the material deterioration was prevented, thereby showing a high charge capacity. In addition, since the lithium-supplementing material hardly intercalated lithium after deintercalation of lithium for the first time, that is, no longer participated in the electrochemical reaction in the battery, the structure of the material after fluorine doping was stable after deintercalation of lithium, and due to the carbon-coated material had good electrical conductivity, the material can also serve as a conductive agent in the battery after deintercalation of lithium. Therefore, it is ideal to provide the cathode lithium-supplementing additive of the examples of the present application in a core-shell structure, and use the lithium-supplementing material, in which fluorine atoms replace the oxygen vacancies, as the core, so as to improve the performances, including high voltage stability, the thermal stability, and the lithium-supplementing effect, of the cathode lithium-supplementing additive of the examples of the present application, thereby improving the cycle performance and safety performance of the corresponding battery.

The above data can well prove that adding a small amount of the cathode lithium-supplementing additive of the examples of the present application can significantly improve the battery capacity, the initial Coulombic efficiency, and the cycle performance, effectively increase the battery energy density, thus having good development prospects.

The above embodiments only involve several implementation modes of the present application, and their descriptions are relatively specific and detailed, but should not be construed as limiting the patent scope of the present application. It should be noted that those skilled in the art can make various modifications and improvements without departing from the concept of the present application, and all these variations fall within the protection scope of the present application. Therefore, the protection scope of this patent application should be determined by the appended claims.

## Claims

1. A cathode lithium-supplementing additive, comprising a lithium-supplementing material, wherein the lithium-supplementing material further comprises fluorine atoms, and the fluorine atoms replace oxygen atoms in the lithium-supplementing material and are in oxygen vacancies.

2. The cathode lithium-supplementing additive according to claim 1, wherein a molar number of the fluorine atoms replacing the oxygen atoms is 0.01 to 0.8 times a molar number of the oxygen atoms in the cathode lithium-supplementing additive.

3. The cathode lithium-supplementing additive according to claim 1 or 2, wherein a molar number of the fluorine atom replacing the oxygen atom is 0.01 to 0.1 times a molar number of the oxygen atoms in the cathode lithium-supplementing additive.

4. The cathode lithium-supplementing additive according to any one of claims 1-3, wherein a surface layer or a surface of the cathode lithium-supplementing additive further comprises a hydrophobic fluoride.

5. The cathode lithium-supplementing additive according to claim 4, wherein the hydrophobic fluoride comprises lithium fluoride.

6. The cathode lithium-supplementing additive according to claim 4 or 5, wherein a mass content of the hydrophobic fluoride in the cathode lithium-supplementing additive is 0.1 wt.% to 2 wt.%.

7. The cathode lithium-supplementing additive according to any one of claims 1-6, wherein a particle size of the cathode lithium-supplementing additive is 1 µm to 20 µm.

8. The cathode lithium-supplementing additive according to any one of claims 1 to 7, wherein
the cathode lithium-supplementing additive further comprises a hydrophobic encapsulation layer, and the hydrophobic encapsulation layer covers the lithium-supplementing material; and/or
the lithium-supplementing material comprises a molecular formula of LₓM_{y}O_{z}, in which, L represents Li or/and mixed alkali metal elements of Li and less than or equal to 30% of at least one of K and Na; M comprises at least one of Fe, Co, Ni, Mn, V, Fe-Co, Cu, Mo, Al, Ti, and Mg; wherein 0<x≤6, 0<y≤3, and 0<z≤5.

9. The cathode lithium-supplementing additive according to claim 8, wherein the LₓM_{y}O_{z} comprises at least one of Li₅Fe_{0.98}Al_{0.02}O₄, Li₂NiO₂, Li₅FeO₄, Li₂MnO₂, Li₆MnO₄, and Li₂CuO₂.

10. The cathode lithium-supplementing additive according to claim 8 or 9, wherein
the hydrophobic encapsulation layer comprises at least one of an ionic conductor encapsulation layer and an electronic conductor encapsulation layer; and/or
a thickness of the hydrophobic encapsulation layer is 5 nm to 100 nm.

11. The cathode lithium-supplementing additive according to claim 10, wherein
a material of the ionic conductor encapsulation layer comprises at least one of a perovskite type, a NASICON type, and a garnet type; and
a material of the electronic conductor encapsulation layer comprises at least one of a carbon material, a conductive oxide, and a conductive organic matter.

12. A preparation method of a cathode lithium-supplementing additive, comprising the following steps:
mixing a lithium-supplementing material precursor and a fluorine source to obtain a precursor mixture material; and
sintering the precursor mixture material in an inert atmosphere to obtain the cathode lithium-supplementing additive.

13. The preparation method according to claim 12, wherein
the lithium-supplementing material precursor comprises a LₓM_{y}O_{z} precursor, in which, L represents Li or/and mixed alkali metal elements of Li and less than or equal to 30% of at least one of K and Na; M comprises at least one of Fe, Co, Ni, Mn, V, Fe-Co, Cu, Mo, Al, Ti, and Mg; wherein 0<x≤6, 0<y≤3, and 0<z≤5; and/or
the lithium-supplementing material precursor comprises a transition metal salt, and a molar ratio of a fluorine element in the fluorine source to an oxygen element in the transition metal salt is (0.01 to 1) : 1; and/or
the sintering is performed at a temperature of 500°C to 1000°C for a time of 4 hrs to 24 hrs; and/or
the fluorine source comprises at least one of ammonium fluoride, sodium fluoride, potassium fluoride, lithium fluoride, aluminum fluoride, potassium bifluoride, and sodium bifluoride; and/or
after the sintering, the method further comprises forming a hydrophobic encapsulation layer covering a material after being sintered on a surface thereof.

14. An electrode plate, comprising a current collector and an electrode active layer bonded to a surface of a current collector, wherein the electrode active layer comprises the cathode lithium-supplementing additive according to any one of claims 1-11 or the cathode lithium-supplementing additive prepared by the preparation method according to any one of claims 12-13.

15. A secondary battery, comprising a cathode plate and an anode plate, wherein the cathode plate and/or the anode plate are the electrode plates according to claim 14.
